# EUROPÄISCHE PATENTSCHRIFT

(11) **EP 1 536 955 B1**
(45) Veröffentlichungstag und Bekanntmachung des Hinweises auf die Patenterteilung: **19.09.2007**
(21) Anmeldenummer: 03739848.4
(22) Anmeldetag: 24.07.2003
(51) Int. Cl.: B60C 27/10

(54) **SPANNVORRICHTUNG FÜR EINE GLEITSCHUTZKETTE**
TENSIONING DEVICE FOR AN ANTI-SKID CHAIN
DISPOSITIF DE SERRAGE POUR UNE CHAINE ANTIDERAPANTE

(30) Priorität: 05.09.2002 AT 5932002 U
(43) Veröffentlichungstag der Anmeldung: 08.06.2005
(73) Patentinhaber: PEWAG AUSTRIA GmbH, 8010 Graz (AT)
(72) Erfinder: PENGG, Ägyd, A-9220 Velden (AT)
(74) Vertreter: Forsthuber, Martin
(86) Internationale Anmeldenummer: PCT/AT2003/000211
(87) Internationale Veröffentlichungsnummer: WO 2004/022363

(56) Entgegenhaltungen:
- DE-U- 29 703 911

## Beschreibung

Die Erfindung betrifft eine Spannvorrichtung für eine Gleitschutzkette mit einem Gehäuse und einem Betätigungsglied, das zumindest eine Stellung, in welcher ein durch eine Gehäuseöffnung in das Gehäuse hineinziehbarer Spannstrang entgegen seiner Spannrichtung blockierbar ist, sowie eine Freigabestellung aufweist, in welcher die Blockierung aufgehoben ist, und der Spannstrang innerhalb des Gehäuses an eine in Aufwickelrichtung vorgespannte Wickelrolle angeschlossen ist, die um ihre Achse drehbar gelagert ist, wobei an der Wickelrolle ein Klinkenkrad mit einer ihm zugeordneten, federbelasteten, mittels des Betätigungsgliedes betätigbaren Sperrklinke vorgesehen ist, und das Betätigungsglied um eine zur Achse der Wickelrolle parallele Achse drehbar gelagert ist.

Spannvorrichtungen der oben genannten Art werden üblicherweise bei Gleitschutzketten verwendet, um nach der Montage einen unerwünschten Rücklauf des Spannstranges entgegen der Spannrichtung zu vermeiden.

Eine gattungsgemäße Spannvorrichtung wird beispielsweise in der DE 297 03 911 U1 vorgestellt. Bei dieser Spannvorrichtung ist ein Gehäuse vorgesehen, in welchem der Spannstrang auf eine Wickeltrommel aufgewickelt werden kann, die mit einem Klinkenrad drehfest verbunden ist. Die Wickeltrommel ist zum Aufwickeln des Spannstranges in der Aufwickelrichtung durch eine Feder vorgespannt. Das Aufwickeln des Spannstranges kann über ein außen am Gehäuse angebrachtes Betätigungsglied ausgelöst werden. Nachteilig an dieser Vorrichtung ist die relativ unpraktische Handhabung des Betätigungsgliedes, welches im Fall von Verschmutzung bzw. Vereisung auch leicht verklemmen kann.

Es ist daher eine Aufgabe der Erfindung, eine Spannvorrichtung zu schaffen, die einfach zu handhaben ist und auch unter widrigen äußeren Bedingungen einen hohen Bedienungskomfort aufweist.

Diese Aufgabe wird mit einer Spannvorrichtung der eingangs genannten Art erfindungsgemäß dadurch gelöst, dass die Sperrklinke eine Basis mit zwei einen Winkel einschließenden Schenkel aufweist, wobei die Sperrklinke in einem Schnittpunkt der beiden Schenkel um eine zur Achse der Wickelrolle parallelen Achse gelagert ist, die Sperrklinke an einem dem Klinkenrad abgewandten, freien Ende eines Schenkels mit einer Auflauffläche des Betätigungsgliedes in Berührung bringbar ist, sodass die Sperrklinke durch Abgleiten der Auflauffläche an dem freien Ende von der Freigabestellung in eine den Spannstrang entgegen seiner Spannrichtung fixierende Halteposition bringbar ist; wobei die Sperrklinke von der Auflauffläche in der Halteposition gehalten ist, die Sperrklinke mittels des Betätigungsgliedes aus der Halteposition in eine Sperrposition bringbar ist, in welcher der Spannstrang vollständig blockiert ist, wobei ein dem Klinkenrad zugeordneter Schenkel der Sperrklinke in der Sperrposition von einer Haltenase des Betätigungsgliedes gegen das Klinkenrad fixiert ist.

Es ist ein Verdienst der Erfindung, eine einfach aufgebaute und robuste Spannvorrichtung zu schaffen, die sich überdies durch einen hohen Bedienungskomfort auszeichnet, da alle Positionen zur Freigabe und Fixierung des Spannstranges mittels des Betätigungsgliedes mit einer Hand eingestellt werden können.

Eine vorteilhafte Variante der Erfindung sieht vor, dass der dem Klinkenrad zugeordnete Schenkel der Sperrklinke mittels einer Schraubenfeder belastet ist, wobei die Schraubenfeder in einer an einer Innenwand des Gehäuses verlaufenden Vertiefung mit einem halbkreisförmigen Querschnitt geführt sein kann.

Weiters kann sich die Schraubenfeder an ihrem der Sperrklinke abgewandten Endbereich an einem in das Innere des Gehäuses verlaufenden Vorsprung der Gehäuseinnenwand abstützen, wobei der Vorsprung an seinen der Schraubenfeder abgewandten Bereichen formschlüssig mit dem Betätigungsglied ausgebildet sein kann.

Die Auflauffläche des Betätigungsgliedes kann nach außen gewölbt sein. So kann das Betätigungsglied in seinem die Auflauffläche aufweisenden Endbereich beispielsweise als Kreissegment ausgebildet sein, wobei die Auflauffläche einen kreisbogenförmigen Querschnitt aufweisen kann.

Vorteilhafterweise kann die Bewegung der Sperrklinke in die Freigabeposition durch zumindest einen Anschlag für den dem Klinkenrad zugeordneten Schenkel begrenzt sein, wobei an einander gegenüberliegenden Seiten der Längsmittelgeraden der Schraubenfeder je zumindest ein Anschlag vorgesehen sein kann.

Weitere Vorteile lassen sich dadurch erzielen, dass ein einem freien Ende des dem Klinkenrad benachbarten Schenkels zugeordneter Anschlag zumindest abschnittsweise formschlüssig mit der Haltenase des Betätigungsgliedes ausgebildet ist.

Die Erfindung samt weiterer Vorteile wird im Folgenden anhand einiger nicht einschränkender Ausführungsbeispiele näher erläutert, welche in der Zeichnung veranschaulicht sind. In dieser zeigen in schematischer Form:
Fig. 1 eine erfindungsgemäße Spannvorrichtung in perspektivischer Ansicht;
Fig. 2 einen Schnitt entlang der Linie II-II durch die Spannvorrichtung aus Fig. 1 in einer "Freigabeposition";
Fig. 3 die Spannvorrichtung aus Fig. 2 in einer "Halteposition" und
Fig. 4 die Spannvorrichtung aus Fig. 3 in einer "Sperrposition".

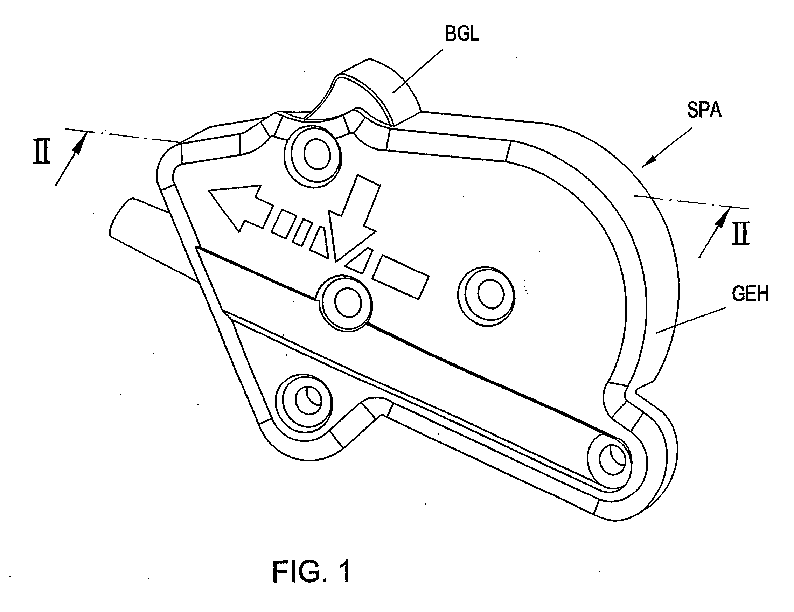

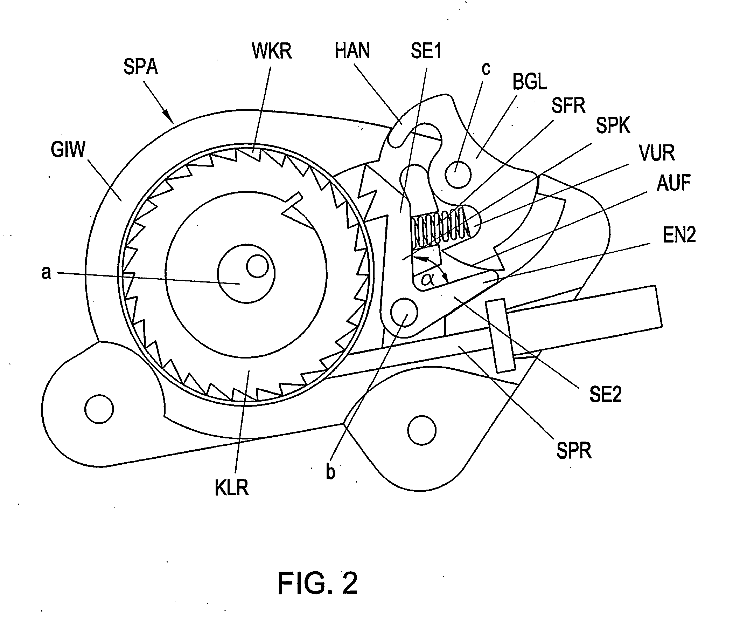

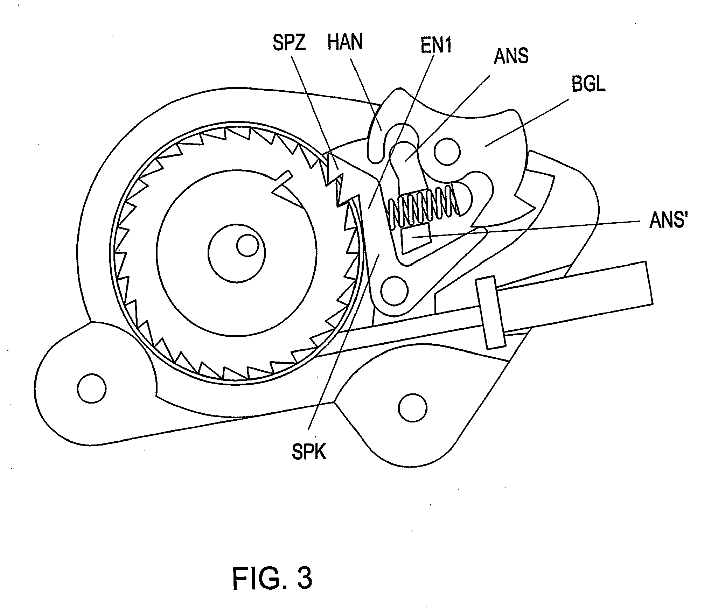

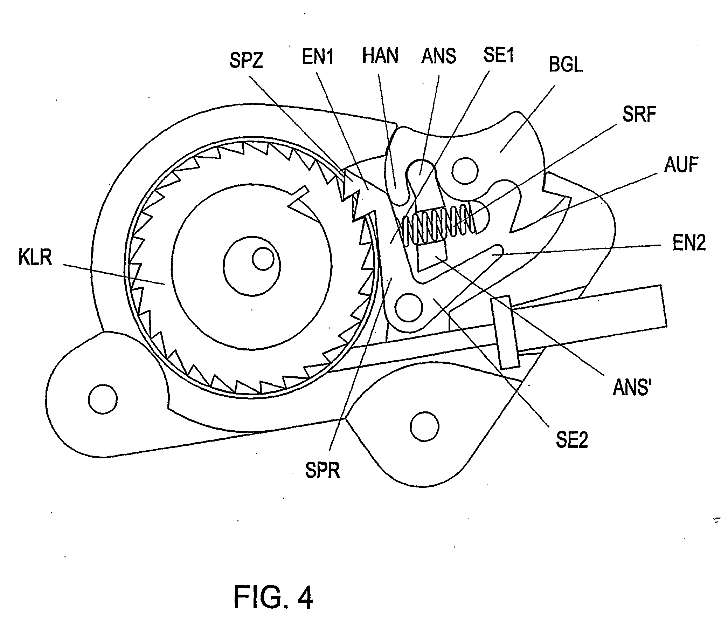

Gemäß Fig. 1 weist eine erfindungsgemäße Spannvorrichtung SPA für eine Gleitschutzkette ein Gehäuse GEH auf, in welchem ein Betätigungsglied BGL drehbar gelagert ist. Das Betätigungsglied BGL kann zwei Stellungen aufweisen, in welcher ein durch eine Gehäuseöffnung in das Gehäuse GEH hineinziehbarer Spannstrang SPR entgegen seiner Spannrichtung blockierbar ist. Diese beiden Blockierstellungen sind in den Fig. 3 und 4 dargestellt und im Folgenden als "Halteposition" bzw. als "Sperrposition" bezeichnet. Weiters weist das Betätigungsglied eine "Freigabestellung" (Fig. 2) auf, in welcher die Blockierung aufgehoben ist, und der Spannstrang auf eine innerhalb des Gehäuses an eine in Aufwickelrichtung vorgespannte Wickelrolle WKR aufgewickelt werden kann.

Die Wickelrolle WKR kann beispielsweise durch eine hier nicht dargestellte Spiralfeder vorgespannt sein. Weiters ist die Wickelrolle WKR gemäß Fig. 2 um ihre Achse a drehbar gelagert, wobei an der Wickelrolle WKR ein Klinkenkrad KLR mit einer ihm zugeordneten, federbelasteten, mittels des Betätigungsgliedes BGL betätigbaren Sperrklinke SPK vorgesehen ist.

Um in das Klinkenrad eingreifen zu können, weist die Sperrklinke mindestens einen Sperrzahn SPZ auf, der mit Zähnen des Klinkenrades in Eingriff bringbar ist, sodass das Klinkenrad in Abwickelrichtung des Spanstranges SPR blockiert werden kann.

Weiters ist das Betätigungsglied BGL um eine zur Achse a der Wickelrolle WKR parallel verlaufende Achse c drehbar gelagert.

Die Sperrklinke SPK weist eine Basis mit zwei einen Winkel α einschließenden Schenkeln SE1, SE2 auf. Die Sperrklinke SPK ist in einem Schnittpunkt der beiden Schenkel SE1, SE2 um eine zur Achse a der Wickelrolle WKR parallelen Achse b gelagert. Weiters ist die Sperrklinke SPK an einem dem Klinkenrad KLR abgewandten, freien Ende EN2 des Schenkels SE2 mit einer Auflauffläche AUF des Betätigungsgliedes BGL in Berührung bringbar. Durch Abgleiten der Auflauffläche AUF an dem freien Ende EN2 der Sperrklinke SPK kann die Sperrklinke SPK von der Freigabestellung (Fig. 2) in eine den Spannstrang (SPR) fixierende Halteposition (Fig. 3) gebracht werden.

Der dem Klinkenrad KLR zugeordnete Schenkel SE1 der Sperrklinke SPK kann mittels einer Schraubenfeder SRF belastet sein, welche in einer an einer Innenwand des Gehäuses GEH verlaufenden, hier nicht dargestellten Vertiefung des Gehäuses GEH mit einem halbkreisförmigen Querschnitt geführt sein kann. Weiters kann sich die sich die Schraubenfeder SRF an ihrem der Sperrklinke SPK abgewandten Endbereich an einem in das Innere des Gehäuses GEH verlaufenden Vorsprung VUR der Gehäuseinnenwand GIW abstützen, wobei der Vorsprung VUR an seinen der Schraubenfeder abgewandten Bereichen formschlüssig mit dem Betätigungsglied BGL ausgebildet sein kann.

Die Auflauffläche AUF kann nach außen gewölbt sein, wodurch gewährleistet wird, dass sich das zugeordnete freie Ende EN2 der Sperrklinke SPK besonders gut betätigen lässt. Das Betätigungsglied BGL kann in seinem die Auflauffläche AUF aufweisenden Endbereich beispielsweise als Kreissegment ausgebildet sein, wobei die Auflauffläche AUF einen kreisbogenförmigen Querschnitt aufweisen kann.

Die Sperrklinke SPK ist von der Auflauffläche AUF in der Halteposition gehalten, wobei die Sperrklinke SPK mittels des Betätigungsgliedes BGL aus der Halteposition (Fig. 3) in eine Sperrposition (Fig. 4) gebracht werden kann.

In der Halteposition greift der Sperrzahn SPZ der Sperrklinke SPK in die Verzahnung des Klinkenrades KLR ein, wobei der Sperrzahn SPZ in dieser Position durch eine Verdrehung des Klinkenrades KLR in Aufwickelrichtung des Spannstranges SPR aus dem Klinkenrad herausgeschwenkt werden kann, so dass der folgende Zahn des Klinkenrades KLR unter ihm hindurchlaufen kann.

In der Sperrposition sind die Auflauffläche AUF und das freie Ende EN1 voneinander entfernt, wobei ein dem Klinkenrad KLR zugeordneter Schenkel SE2 der Sperrklinke SPK in der Sperrposition (Fig. 4) von einer Haltenase HAN des Betätigungsgliedes BGL gegen das Klinkenrad KLR fixiert ist. Ein Anschlag ANS für das freie Ende EN1 des dem Klinkenrad KLR zugeordneten Schenkels SE1 kann zu diesem Zweck an seiner dem Betätigungsglied zugewandten Seite formschlüssig mit der Haltenase HAN ausgebildet sein. Auch kann ein weiterer Anschlag ANS' für den Schenkel SE1 vorgesehen sein der an einer dem Anschlag ANS gegenüberliegenden Seite der Schraubenfeder SRF angeordnet ist. In der Sperrposition ist der Spannstrang SPR sowohl in Auf- als auch in Abwickelrichtung vollständig blockiert.

Durch die erfindungsgemäße Lösung lässt sich die Justierung des Spannstranges wesentlich vereinfachen, da durch die spezielle bauliche Ausgestaltung eine besonders einfache und komfortable Betätigung des Betätigungsgliedes erzielt wird.

## Patentansprüche

1. Spannvorrichtung (SPA) für eine Gleitschutzkette mit einem Gehäuse (GEH) und einem Betätigungsglied (BGL), das zumindest eine Stellung, in welcher ein durch eine Gehäuseöffnung in das Gehäuse (GEH) hineinziehbarer Spannstrang (SPR) entgegen seiner Spannrichtung blockierbar ist, sowie eine Freigabestellung aufweist, in welcher die Blockierung aufgehoben ist, und der Spannstrang (SPR) innerhalb des Gehäuses an eine in Aufwickelrichtung vorgespannte Wickelrolle (WKR) angeschlossen ist, die um ihre Achse (a) drehbar gelagert ist, wobei an der Wickelrolle (WKR) ein Klinkenkrad (KLR) mit einer ihm zugeordneten, federbelasteten, mittels des Betätigungsgliedes (BGL) betätigbaren Sperrklinke (SPK) vorgesehen ist, die Sperrklinke (SPK) eine Basis mit zwei Schenkel (SE1, SE2) aufweist, und das Betätigungsglied um eine zur Achse (a) der Wickelrolle parallele Achse (c) drehbar gelagert ist, wobei die Sperrklinke (SPK) in einem Schnittpunkt der beiden Schenkel (SE1, SE2) um eine zur Achse (a) der Wickelrolle parallelen Achse (b) gelagert ist, die Sperrklinke (SPK) an einem dem Klinkenrad abgewandten, freien Ende (EN2) eines Schenkels (SE2) mit einer Auflauffläche (AUF) des Betätigungsgliedes (BGL) in Berührung bringbar ist, sodass die Sperrklinke (SPK) durch Abgleiten der Auflauffläche (AUF) an dem freien Ende (EN2) von der Freigabestellung (Fig. 2) in eine den Spannstrang (SPR) entgegen seiner Spannrichtung fixierende Halteposition (Fig. 3) bringbar ist, wobei die Sperrklinke (SPK) von der Auflauffläche (AUF) in der Halteposition gehalten ist, die Sperrklinke (SPK) mittels des Betätigungsgliedes (BGL) aus der Halteposition (Fig. 3) in eine Sperrposition (Fig. 4) bringbar ist, in welcher der Spannstrang vollständig blockiert ist, **dadurch gekennzeichnet, dass** die zwei Schenkel (SE1, SE2) der Sperrklinke (SPK) einen Winkel (α) einschließen, und ein dem Klinkenrad zugeordneter Schenkel (SE1) der Sperrklinke (SPK) in der Sperrposition (Fig. 4) von einer Haltenase (HAN) des Betätigungsgliedes gegen das Klinkenrad (KLR) fixiert ist.

2. Spannvorrichtung nach Anspruch 1, **dadurch gekennzeichnet, dass** der dem Klinkenrad (KLR) zugeordnete Schenkel (SE1) der Sperrklinke (SPK) mittels einer Schraubenfeder (SRF) belastet ist.

3. Spannvorrichtung nach Anspruch 2, **dadurch gekennzeichnet, dass** die Schraubenfeder (SRF) in einer an einer Innenwand des Gehäuses (GEH) verlaufenden Vertiefung mit einem halbkreisförmigen Querschnitt geführt ist.

4. Spannvorrichtung nach einem der Ansprüche 1 bis 3, **dadurch gekennzeichnet, dass** sich die Schraubenfeder (SRF) an ihrem der Sperrklinke (SPK) abgewandten Endbereich an einem in das Innere des Gehäuses (GEH) verlaufenden Vorsprung (VUR) der Gehäuseinnenwand (GIW) abstützt.

5. Spannvorrichtung nach Anspruch 4, **dadurch gekennzeichnet, dass** der Vorsprung (VUR) an seinen der Schraubenfeder abgewandten Bereichen formschlüssig mit dem Betätigungsglied (BGL) ausgebildet ist.

6. Spannvorrichtung nach einem der Ansprüche 1 bis 5, **dadurch gekennzeichnet, dass** die Auflauffläche (AUF) nach außen gewölbt ist.

7. Spannvorrichtung nach einem der Ansprüche 1 bis 6, **dadurch gekennzeichnet, dass** das Betätigungsglied (BGL) in seinem die Auflauffläche (AUF) aufweisenden Endbereich als Kreissegment ausgebildet ist.

8. Spannvorrichtung nach einem der Ansprüche 1 bis 7, **dadurch gekennzeichnet, dass** die Auflauffläche (AUF) einen kreisbogenförmigen Querschnitt aufweist.

9. Spannvorrichtung nach einem der Ansprüche 1 bis 8, **dadurch gekennzeichnet, dass** die Bewegung der Sperrklinke (SPK) in die Freigabeposition (Fig. 1) durch zumindest einen Anschlag (ANS') für den dem Klinkenrad zugeordneten Schenkel (SE1) begrenzt ist.

10. Spannvorrichtung nach Anspruch 9, **dadurch gekennzeichnet, dass** an einander gegenüberliegenden Seiten der Längsmittelgeraden der Schraubenfeder je zumindest ein Anschlag vorgesehen ist.

11. Spannvorrichtung nach Anspruch 10, **dadurch gekennzeichnet, dass** ein einem freien Ende (EN1) des dem Klinkenrad zugeordneten Schenkels (SE1) zugeordneter Anschlag zumindest abschnittsweise formschlüssig mit der Haltenase (HAN) ausgebildet ist.

## Claims

1. Tensioning device (SPA) for an anti-skid chain, comprising a housing (GEH) and an actuating member (BGL), which has at least one position, in which a tensioning strand (SPR) that can be introduced into the housing (GEH) through a housing opening can be blocked against its tensioning direction, as well as a release position, in which the block is removed, and the tensioning strand (SPR) is attached inside the housing to a winding reel (WKR), which is pre-tensioned in the winding direction and is mounted to rotate about its axis (a), a ratchet (KLR) comprising an associated spring-loaded blocking pawl (SPK), which can be operated by the actuating member (BGL), being provided on the winding reel (WKR), the blocking pawl (SPK) having a base comprising two limbs (SE1, SE2), and the actuating member being mounted to rotate about an axis (c) parallel to the axis (a) of the winding reel, wherein the blocking pawl (SPK) is mounted at an intersection of the two limbs (SE1, SE2) about an axis (b) parallel to the axis (a) of the winding reel, the blocking pawl (SPK) can be brought into contact with a ramp surface AUF) of the actuating member (BGL) at a free end (EN2) of a limb (SE2), which faces away from the ratchet, so that the blocking pawl (SPK) can be brought from the release position (Fig. 2) into a holding position (Fig. 3), which fixes the tensioning strand (SPR) against its tensioning direction, by sliding down the ramp surface (AUF) at the free end (EN2), wherein the blocking pawl (SPK) is retained in the holding position by the ramp surface (AUF), the blocking pawl (SPK) can be brought out of the holding position (Fig. 3) by means of the actuating member (BGL) into a blocking position (Fig. 4) in which the tensioning strand is completely blocked, **characterised in that** the two limbs (SE1, SE2) form an angle (α), and a limb (SE1) of the blocking pawl (SPK) associated with the ratchet is fixed against the ratchet (KLR) in the blocking position (Fig. 4) by a retaining lug (HAN) of the actuating member.

2. Tensioning device according to Claim 1, **characterised in that** the limb (SE1) of the blocking pawl (SPK) associated with the ratchet (KLR) is loaded by means of a helical spring (SRF).

3. Tensioning device according to Claim 2, **characterised in that** the helical spring (SRF) is guided in a recess with a semicircular cross section running along an internal wall of the housing (GEH).

4. Tensioning device according to one of Claims 1 to 3, **characterised in that** the helical spring (SRF) is supported at its end, which faces away from the blocking pawl (SPK), by a projection (VUR) of the housing inner wall (GIW), which runs along the inside of the housing (GEH).

5. Tensioning device according to Claim 4, **characterised in that** the areas of the projection (VUR), which face away from helical spring, are designed to interlock with the actuating member (BGL).

6. Tensioning device according to one of Claims 1 to 5, **characterised in that** the ramp surface (AUF) is curved on the outside.

7. Tensioning device according to one of Claims 1 to 6, **characterised in that**, at its end area where the ramp surface (AUF) is located, the actuating member (BGL) is designed as a segment of a circle.

8. Tensioning device according to one of Claims 1 to 7, **characterised in that** the ramp surface (AUF) has a cross section in the form of a circular arc.

9. Tensioning device according to one of Claims 1 to 8, **characterised in that** the movement of the blocking pawl (SPK) into the release position (Fig. 1) is restricted by at least one stop (ANS') for the limb (SE1) associated with the ratchet.

10. Tensioning device according to Claim 9, **characterised in that** at least one stop in each case is provided on opposite sides of the longitudinal centre lines of the helical spring.

11. Tensioning device according to Claim 10, **characterised in that** at least parts of a stop associated with a free end (EN1) of the limb (SE1) associated with the ratchet are designed to interlock with the retaining lug (HAN).

## Revendications

1. Dispositif de serrage (SPA) pour une chaîne antidérapante comprenant un boîtier (GEH) et un organe d'actionnement (BGL), qui comprend au moins une position, dans laquelle une corde de serrage (SPR) pouvant être tirée à l'intérieur du boîtier (GEH) à travers une ouverture de boîtier peut être bloquée dans le sens inverse de sa direction de serrage, ainsi qu'une position de libération, dans laquelle le blocage est supprimé, et la corde de serrage (SPR) à l'intérieur du boîtier est raccordée à un mandrin (WKR) précontraint dans la direction d'enroulement, qui est logé de manière rotative autour de son axe (a), une roue à cliquet (KLR) dotée d'un cliquet d'arrêt (SPK) qui lui est associé, sollicité par un ressort, pouvant être actionné au moyen de l'organe d'actionnement (BGL), étant prévue sur le mandrin (WKR), le cliquet d'arrêt (SPK) comprenant une base dotée de deux branches (SE1, SE2), et l'organe d'actionnement étant logé de manière rotative autour d'un axe (c) parallèle à l'axe (a) du mandrin, le cliquet d'arrêt (SPK) étant logé dans un point d'intersection des deux branches (SE1, SE2) autour d'un axe (b) parallèle à l'axe (a) du mandrin, le cliquet d'arrêt (SPK) pouvant être amené en contact avec une surface de butée (AUF) de l'organe d'actionnement (BGL) sur une extrémité libre (EN2) d'une branche (SE2) opposée à la roue à cliquet, de sorte que le cliquet d'arrêt (SPK), en faisant glisser la surface de butée (AUF) contre l'extrémité libre (EN2), peut être amené de la position de libération (figure 2) dans une position de maintien (figure 3) fixant la corde de serrage (SPR) dans le sens inverse de sa direction de serrage, le cliquet d'arrêt (SPK) étant maintenu par la surface de butée (AUF) dans la position de maintien, le cliquet d'arrêt (SPK) pouvant être amené au moyen de l'organe d'actionnement (BGL) de la position de maintien (figure 3) dans une position de verrouillage (figure 4), dans laquelle la corde de serrage est entièrement bloquée, **caractérisé en ce que** les deux branches (SE1, SE2) du cliquet d'arrêt (SPK) enferment un angle (α), et une branche (SE1) du cliquet d'arrêt (SPK) associée à la roue à cliquet est fixée dans la position de verrouillage (figure 4) par un crochet de maintien (HAN) de l'organe d'actionnement contre la roue à cliquet (KLR).

2. Dispositif de serrage selon la revendication 1, **caractérisé en ce que** la branche (SE1) du cliquet d'arrêt (SPK) associée à la roue à cliquet (KLR) est sollicitée au moyen d'un ressort hélicoïdal (SRF).

3. Dispositif de serrage selon la revendication 2, **caractérisé en ce que** le ressort hélicoïdal (SRF) est guidé dans un évidement, s'étendant sur une paroi intérieure du boîtier (GEH), doté d'une section transversale semi-circulaire.

4. Dispositif de serrage selon l'une quelconque des revendications 1 à 3, **caractérisé en ce que** le ressort hélicoïdal (SRF) s'appuie au niveau de sa zone d'extrémité opposée au cliquet d'arrêt (SPK) contre une saillie (VUR) de la paroi intérieure de boîtier (GIW) s'étendant à l'intérieur du boîtier (GEH).

5. Dispositif de serrage selon la revendication 4, **caractérisé en ce que** la saillie (VUR) est conçue sur ses zones opposées au ressort hélicoïdal par coopération de formes avec l'organe d'actionnement (BGL).

6. Dispositif de serrage selon l'une quelconque des revendications 1 à 5, **caractérisé en ce que** la surface de butée (AUF) est bombée vers l'extérieur.

7. Dispositif de serrage selon l'une quelconque des revendications 1 à 6, **caractérisé en ce que** l'organe d'actionnement (BGL) est conçu dans sa zone d'extrémité comprenant la surface de butée (AUF) comme un segment de cercle.

8. Dispositif de serrage selon l'une quelconque des revendications 1 à 7, **caractérisé en ce que** la surface de butée (AUF) comprend une section transversale en forme d'arc de cercle.

9. Dispositif de serrage selon l'une quelconque des revendications 1 à 8, **caractérisé en ce que** le déplacement du cliquet d'arrêt (SPK) dans la position de libération (figure 1) est limité par au moins une butée (ANS') pour la branche (SE1) associée à la roue à cliquet.

10. Dispositif de serrage selon la revendication 9, **caractérisé en ce qu'**il est prévu respectivement au moins une butée sur les faces opposées l'une à l'autre des droites centrales longitudinales du ressort hélicoïdal.

11. Dispositif de serrage selon la revendication 10, **caractérisé en ce qu'**une butée associée à une extrémité libre (EN1) de la branche (SE1) associée à la roue à cliquet est conçue au moins par sections par coopération de formes avec le crochet de maintien (HAN).
